# EUROPEAN PATENT APPLICATION

(11) **EP 4 597 649 A1**
(43) Date of publication of application: **06.08.2025**
(21) Application number: 23885752.8
(22) Date of filing: 31.10.2023
(51) Int. Cl.: H01M 8/1213, H01M 4/86, H01M 4/88, H01M 8/04, H01M 8/12, H01M 8/1226, H01M 8/2475

(54) **ELECTROCHEMICAL CELL, ELECTROCHEMICAL CELL DEVICE, MODULE, AND MODULE-ACCOMMODATING DEVICE**

(30) Priority: 31.10.2022 JP 2022174989
(71) Applicant: Kyocera Corporation, Kyoto-shi, Kyoto 612-8501 (JP)
(72) Inventor: MIYAZAKI, Kazunari, Kyoto-shi, Kyoto 612-8501 (JP)
(74) Representative: Viering, Jentschura & Partner mbB Patent- und Rechtsanwälte
(86) International application number: PCT/JP2023/039211
(87) International publication number: WO 2024/095998

(57) **Abstract**

An electrochemical cell includes a solid electrolyte layer and a first electrode. The solid electrolyte layer includes a first material having ion conductivity and in which a rare earth element is contained as a solid solution. The first electrode contains a rare earth element and has a first surface contacting the solid electrolyte layer and a second surface on a side opposite to the first surface. A content proportion of the rare earth element in the first electrode is higher on a side of the second surface than on a side of the first surface.

## Description

### TECHNICAL FIELD

The present disclosure relates to an electrochemical cell, an electrochemical cell device, a module, and a module housing device.

### BACKGROUND OF INVENTION

In recent years, various fuel cell stack devices each including a plurality of fuel cells have been proposed as next-generation energy. A fuel cell is a type of electrochemical cell capable of generating electrical power by using a fuel gas such as a hydrogen-containing gas or an oxygen-containing gas such as air.

### CITATION LIST

### PATENT LITERATURE

Patent Document 1: JP 2014-524655 T

### SUMMARY

An electrochemical cell according to one aspect of the embodiment includes a solid electrolyte layer and a first electrode. The solid electrolyte layer includes a first material having ion conductivity and in which a rare earth element is contained as a solid solution. The first electrode contains a rare earth element and has a first surface contacting the solid electrolyte layer and a second surface on a side opposite to the first surface. A content proportion of the rare earth element in the first electrode is higher on a side of the second surface than on a side of the first surface.

An electrochemical cell device of the present disclosure includes a cell stack including the electrochemical cell described above.

A module of the present disclosure includes the electrochemical cell device described above and a storage container housing the electrochemical cell device.

A module housing device of the present disclosure includes the module described above, an auxiliary device that operates the module, and an external case housing the module and the auxiliary device.

### BRIEF DESCRIPTION OF THE DRAWINGS

FIG. 1A is a horizontal cross-sectional view illustrating an example of an electrochemical cell according to a first embodiment.
FIG. 1B is a side view of an example of the electrochemical cell according to the first embodiment when viewed from the side of an air electrode.
FIG. 1C is a side view of an example of the electrochemical cell according to the first embodiment when viewed from the side of an interconnector.
FIG. 2A is a perspective view illustrating an example of an electrochemical cell device according to the first embodiment.
FIG. 2B is a cross-sectional view taken along a line X-X indicated in FIG. 2A.
FIG. 2C is a top view illustrating an example of the electrochemical cell device according to the first embodiment.
FIG. 3A is an enlarged cross-sectional view of a region R1 indicated in FIG. 1A.
FIG. 3B is an enlarged cross-sectional view illustrating another example of the electrochemical cell according to the first embodiment.
FIG. 4 is an exterior perspective view illustrating an example of a module according to the first embodiment.
FIG. 5 is an exploded perspective view schematically illustrating an example of a module housing device according to the first embodiment.
FIG. 6 is a cross-sectional view illustrating an electrochemical cell device according to a second embodiment.
FIG. 7 is a horizontal cross-sectional view illustrating an example of an electrochemical cell according to the second embodiment.
FIG. 8 is an enlarged cross-sectional view of a region R2 indicated in FIG. 7.
FIG. 9A is a perspective view illustrating an example of an electrochemical cell according to a third embodiment.
FIG. 9B is a partial cross-sectional view of the electrochemical cell illustrated in FIG. 9A.
FIG. 9C is an enlarged cross-sectional view of a region R3 indicated in FIG. 9B.
FIG. 10A is a horizontal cross-sectional view illustrating an example of an electrochemical cell according to a fourth embodiment.
FIG. 10B is a horizontal cross-sectional view illustrating another example of the electrochemical cell according to the fourth embodiment.
FIG. 10C is a horizontal cross-sectional view illustrating another example of the electrochemical cell according to the fourth embodiment.
FIG. 11 is an enlarged cross-sectional view of a region R4 indicated in FIG. 10A.

### DESCRIPTION OF EMBODIMENTS

The fuel cell stack device mentioned above has room for improvement in terms of increasing a performance thereof.

Thus, expectations are held for the provision of an electrochemical cell, an electrochemical cell device, a module, and a module housing device capable of improving performance.

Embodiments of an electrochemical cell, an electrochemical cell device, a module, and a module housing device disclosed in the present application will now be described in detail with reference to the accompanying drawings. Note that the disclosure is not limited by the following embodiments.

Note that the drawings are schematic and that the dimensional relationships between elements, the proportions of the elements, and the like may differ from the actual ones. There may be differences between the drawings in the dimensional relationships, proportions, and the like.

### First Embodiment

### Configuration of Electrochemical Cell

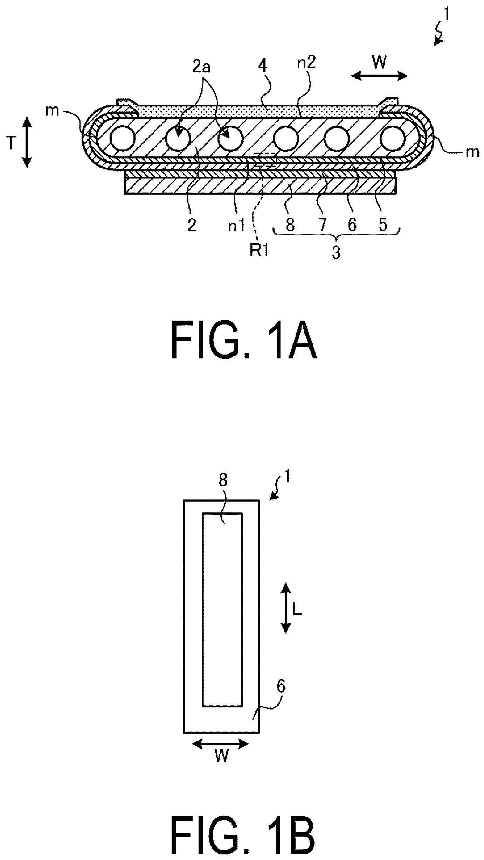

First, with reference to FIGs. 1A to 1C, an example of a solid oxide fuel cell will be described as an electrochemical cell constituting the electrochemical cell device according to the first embodiment. The electrochemical cell device may include a cell stack including a plurality of electrochemical cells. The electrochemical cell device including the plurality of electrochemical cells is simply referred to as a cell stack device.

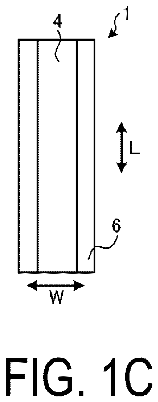

FIG. 1A is a horizontal cross-sectional view illustrating an example of an electrochemical cell according to a first embodiment. FIG. 1B is a side view of an example of the electrochemical cell according to the first embodiment when viewed from the side of an air electrode. FIG. 1C is a side view of an example of the electrochemical cell according to the first embodiment when viewed from the side of an interconnector. Note that FIGs. 1A to 1C are enlarged views each illustrating a part of a configuration of the electrochemical cell. Hereinafter, the electrochemical cell may be simply referred to as a cell.

In the example illustrated in FIGs. 1A to 1C, a cell 1 is hollow flat plate-shaped and has a long thin plate shape. As illustrated in FIG. 1B, the overall shape of the cell 1 when viewed from the side is, for example, a rectangular shape of which a length of a side in a length direction L is from 5 cm to 50 cm and a length in a width direction W orthogonal to the length direction L is from 1 cm to 10 cm, for example. The thickness in a thickness direction T of the entire cell 1 is, for example, from 1 mm to 5 mm.

As illustrated in FIG. 1A, the cell 1 includes a support substrate 2 having electrical conductivity, an element portion 3, and an interconnector 4. The support substrate 2 has a pillar shape having a pair of a first surface n1 and a second surface n2 facing each other, and a pair of circular arc-shaped side surfaces m connecting the first surface n1 and the second surface n2.

The element portion 3 is provided on the first surface n1 of the support substrate 2. The element portion 3 includes a fuel electrode layer 5, a solid electrolyte layer 6, and an air electrode layer 8. In the example illustrated in FIG. 1A, the interconnector 4 is located on the second surface n2 of the cell 1. The cell 1 may include an intermediate layer 7 between the solid electrolyte layer 6 and the air electrode layer 8.

As illustrated in FIG. 1B, the air electrode layer 8 does not extend to a lower end of the cell 1. At a lower end portion of the cell 1, only the solid electrolyte layer 6 is exposed on a surface of the first surface n1. As illustrated in FIG. 1C, the interconnector 4 may extend to the lower end of the cell 1. At the lower end portion of the cell 1, the interconnector 4 and the solid electrolyte layer 6 are exposed on the surface. Note that, as illustrated in FIG. 1A, on the surface of the pair of the circular arc-shaped side surfaces m of the cell 1, the solid electrolyte layer 6 is exposed. The interconnector 4 does not need to extend to the lower end of the cell 1.

Below, constituent members constituting the cell 1 will each be described.

The support substrate 2 includes a gas-flow passage 2a, inside which gas flows. The example of the support substrate 2 illustrated in FIG. 1A includes six gas-flow passages 2a. The support substrate 2 has gas permeability and transmits a fuel gas flowing through the gas-flow passages 2a to the fuel electrode layer 5. The support substrate 2 may have electrical conductivity. The support substrate 2 having electrical conductivity collects, in the interconnector 4, electricity generated in the element portion 3.

The material of the support substrate 2 includes, for example, an iron group metal component and an inorganic oxide. For example, the iron group metal component may be nickel (Ni) and/or NiO. The inorganic oxide may be, for example, a specific rare earth element oxide. The rare earth element oxide may contain, for example, one or more rare earth elements selected from the group consisting of Sc, Y, La, Nd, Sm, Gd, Dy, and Yb.

As the fuel electrode layer 5, any porous electrically conductive ceramic may be used, for example, ceramics containing oxides having ion conductivity such as ZrO₂ in which calcium oxide, magnesium oxide, or a rare earth element oxide is contained as a solid solution, and ceramics containing metals having electron conductivity such as Ni. Such a rare earth element oxide may contain a plurality of rare earth elements, for example, selected from the group consisting of Sc, Y, La, Nd, Sm, Gd, Dy, and Yb. Hereinafter, ZrO₂ in which a calcium oxide, a magnesium oxide, or a rare earth element oxide is contained as a solid solution may be referred to as stabilized zirconia. Stabilized zirconia may also include partially stabilized zirconia. For example, the electrically conductive ceramic may contain Ni and/or NiO, and a material used for the solid electrolyte layer 6 described later. The fuel electrode layer 5 will be described in detail later.

The solid electrolyte layer 6 is an electrolyte and delivers ions between the fuel electrode layer 5 and the air electrode layer 8. At the same time, the solid electrolyte layer 6 has gas blocking properties, and thus, leakage of the fuel gas and the oxygen-containing gas is less likely to occur.

The solid electrolyte layer 6 includes a first material having ion conductivity and in which a rare earth element is contained as a solid solution. For example, the first material may be an oxide ion conductor having oxide ion conductivity or a proton conductor having proton conductivity. The oxide ion conductor may be ZrO₂ or CeO₂, for example. The proton conductor may be, for example, one or more of materials having a perovskite structure containing Zr and/or Ce.

For example, the rare earth element may contain one or more elements selected from the group consisting of Sc, Y, La, Nd, Sm, Gd, Dy, and Yb. The rare earth element may be present as a rare earth oxide. The rare earth element need not include Ce.

The material of the solid electrolyte layer 6 may be, for example, ZrO₂ or CeO₂ in which from 3 mole% to 25 mole% of a rare earth element oxide is contained as a solid solution. The material of the solid electrolyte layer 6 may be, for example, stabilized zirconia containing Yb. The solid electrolyte layer 6 may contain, for example, a perovskite-type compound such as BaZrO₃ or SrZrO₃ in which a rare earth element such as Sc, Y, La, Nd, Sm, Gd, Dy, or Yb is contained as a solid solution.

The air electrode layer 8 has gas permeability. The air electrode layer 8 is an example of a second electrode layer. The open porosity of the air electrode layer 8 may be, for example, in a range from 20% to 50%, in particular, in a range from 30% to 50%.

The material of the air electrode layer 8 is not particularly limited, as long as the material is commonly used for air electrodes. The material of the air electrode layer 8 may be, for example, an electrically conductive ceramic such as a so-called ABO₃-type perovskite oxide.

The material of the air electrode layer 8 may be, for example, a composite oxide in which strontium (Sr) and lanthanum (La) coexist at the A-site. Examples of such a composite oxide include LaₓSr₁₋ₓCo_{y}Fe_{1-y}O₃, LaₓSr₁₋ₓMnO₃, LaₓSr₁₋ₓFeO₃, and LaₓSr₁₋ₓCoO₃. Here, x satisfies 0 < x < 1, and y satisfies 0 < y < 1.

When the element portion 3 includes the intermediate layer 7, the intermediate layer 7 functions as a diffusion suppression layer. When an element such as strontium (Sr) contained in the air electrode layer 8 diffuses into the solid electrolyte layer 6, a resistance layer such as, for example, SrZrO₃ is formed in the solid electrolyte layer 6. By providing the intermediate layer 7, Sr does not diffuse easily, and thus, SrZrO₃ and other oxides having electrical insulation properties do not easily form.

The material of the intermediate layer 7 is not particularly limited, as long as the material generally suppresses diffusion of elements between the air electrode layer 8 and the solid electrolyte layer 6. The material of the intermediate layer 7 may contain, for example, cerium oxide (CeO₂) in which rare earth elements other than cerium (Ce) are contained as a solid solution. Examples of the rare earth elements include gadolinium (Gd) and samarium (Sm).

The interconnector 4 is dense. Therefore, leakage of the fuel gas flowing through the gas-flow passages 2a located inside the support substrate 2, and leakage of the oxygen-containing gas flowing outside the support substrate 2 is less likely to occur. The interconnector 4 may have a relative density of 93% or more, in particular 95% or more.

The material of the interconnector 4 may be a lanthanum chromite-based perovskite-type oxide (LaCrO₃-based oxide), a lanthanum strontium titanium-based perovskite-type oxide (LaSrTiO₃-based oxide), or the like. These materials have electrical conductivity, and are unlikely to be reduced and also unlikely to be oxidized, even when brought into contact with a fuel gas such as a hydrogen-containing gas and an oxygen-containing gas such as air. A metal or an alloy may be used as the material of the interconnector 4.

### Configuration of Electrochemical Cell Device

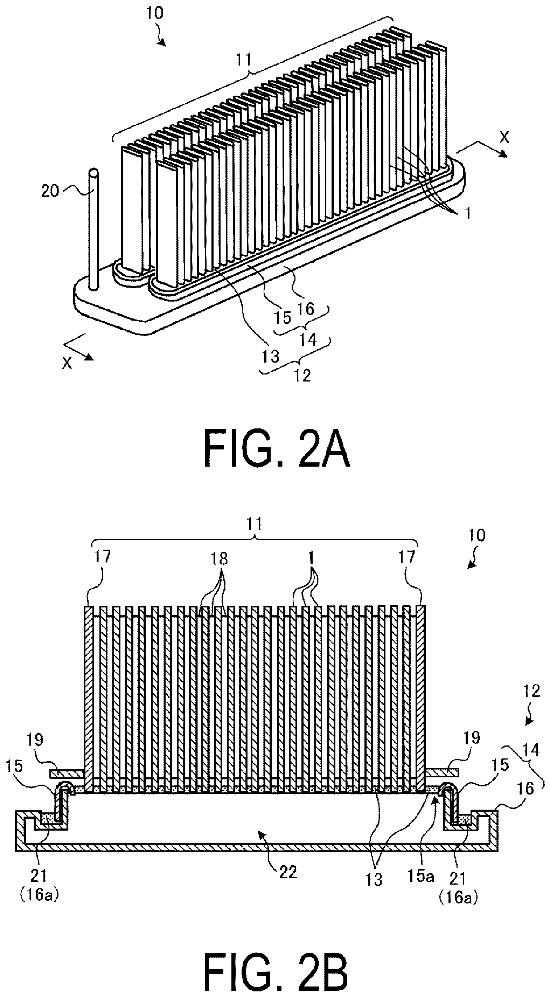

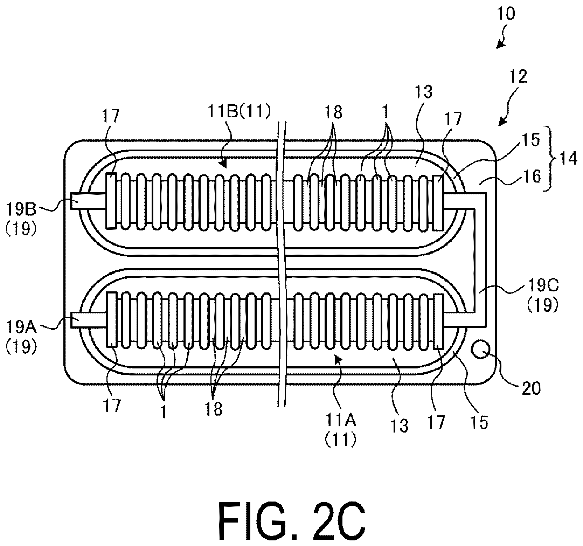

An electrochemical cell device according to the present embodiment using the above-described electrochemical cell will be described with reference to FIGs. 2A to 2C. FIG. 2A is a perspective view illustrating an example of an electrochemical cell device according to the first embodiment. FIG. 2B is a cross-sectional view taken along a line X-X indicated in FIG. 2A. FIG. 2C is a top view illustrating an example of the electrochemical cell device according to the first embodiment.

As illustrated in FIG. 2A, a cell stack device 10 includes a cell stack 11 and a fixing member 12. The cell stack 11 includes a plurality of the cells 1 arrayed (layered) in the thickness direction T of each cell 1 (see FIG. 1A).

The fixing member 12 includes a fixing material 13 and a support member 14. The support member 14 supports the cells 1. The fixing material 13 fixes the cells 1 to the support member 14. The support member 14 includes a support body 15 and a gas tank 16. The support body 15 and the gas tank 16, which constitute the support member 14, are made of metal and are electrically conductive, for example.

As illustrated in FIG. 2B, the support body 15 includes an insertion hole 15a into which a lower end portion of each of the plurality of cells 1 is inserted. The lower end portions of the plurality of cells 1 and the inner wall of the insertion hole 15a are bonded with the fixing material 13.

The gas tank 16 includes an opening portion through which a reactive gas is supplied to the plurality of cells 1 via the insertion hole 15a, and a recessed groove 16a located in the periphery of the opening portion. An outer peripheral end portion of the support body 15 is bonded to the gas tank 16 by a bonding material 21 that is filled into the recessed groove 16a of the gas tank 16.

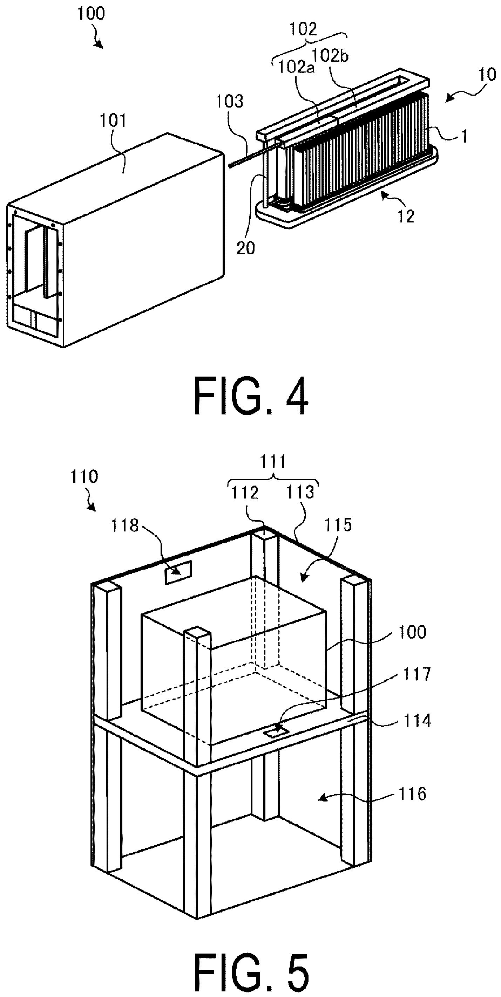

In the example illustrated in FIG. 2A, the fuel gas is stored in an internal space 22 formed by the support body 15 and the gas tank 16, which constitute the support member 14. A gas circulation pipe 20 is connected to the gas tank 16. The fuel gas is supplied to the gas tank 16 through the gas circulation pipe 20 and is supplied from the gas tank 16 to the gas-flow passages 2a (see FIG. 1A) inside the cells 1. The fuel gas to be supplied to the gas tank 16 is produced in a reformer 102 (see FIG. 4) which will be described later.

A hydrogen-rich fuel gas can be produced by steam reforming of a raw fuel, for example. When the fuel gas is produced by steam reforming, the fuel gas contains water vapor.

In the example illustrated in FIG. 2A, the cell stack device 10 includes two rows of the cell stacks 11, two support bodies 15, and the gas tank 16. Each of the two rows of the cell stacks 11 includes the plurality of cells 1. Each of the cell stacks 11 is fixed to a corresponding one of the support bodies 15. An upper surface of the gas tank 16 includes two through holes. Each of the support bodies 15 is disposed in a corresponding one of the through holes. The internal space 22 is constituted by one gas tank 16 and two support bodies 15. In FIG. 2A, the cell stack device 10 including the two rows of cell stacks 11 is illustrated. However, a cell stack device may include one row of cell stacks 11 or three or more rows of cell stacks 11.

The insertion hole 15a has, for example, an oval shape in a top surface view. The length of the insertion hole 15a in an arrangement direction of the cells 1, that is, the thickness direction T, may be longer than the distance between two end current collection members 17 located at both ends of the cell stack 11, for example. The width of the insertion hole 15a may be, for example, greater than the length of each of the cells 1 in the width direction W (see FIG. 1A).

As illustrated in FIG. 2B, bonding portions between the inner wall of the insertion hole 15a and the lower end portions of the cells 1 are filled with the fixing material 13, which is solidified. Thus, the inner wall of the insertion hole 15a and the lower end portions of the plurality of cells 1 are bonded and fixed, and the lower end portions of the cells 1 are bonded and fixed to each other. The gas-flow passages 2a of each of the cells 1 communicate, at the lower end portion, with the internal space 22 of the support member 14.

The fixing material 13 and the bonding material 21 may be a material having low electrical conductivity, such as glass. Specific examples of the materials used in the fixing material 13 and the bonding material 21 include amorphous glass, and in particular, crystallized glass.

As the crystallized glass, for example, any material selected from the group consisting of SiO₂-CaO-based materials, MgO-B₂O₃-based materials, La₂O₃-B₂O₃-MgO-based materials, La₂O₃-B₂O₃-ZnO-based materials, and SiO₂-CaO-ZnO-based materials may be used, and in particular, SiO₂-MgO-based materials may be used.

As illustrated in FIG. 2B, an electrically conductive member 18 is interposed between cells 1 adjacent to each other among the plurality of cells 1. The electrically conductive member 18 electrically connects in series the fuel electrode layer 5 of one of the adjacent ones of the cells 1 with the air electrode layer 8 of the other one of the adjacent ones of the cells 1. More specifically, the electrically conductive member 18 connects the interconnector 4 electrically connected to the fuel electrode layer 5 of the one of the adjacent ones of the cells 1 and the air electrode layer 8 of the other one of the adjacent ones of the cells 1. Note that, when the interconnector 4 is made of a metal or an alloy, the interconnector 4 and the electrically conductive member 18 may be integrally formed with each other, or the electrically conductive member 18 may also serve as the interconnector 4.

As illustrated in FIG. 2B, the end current collection members 17 are each electrically connected to a respective one of the cells 1 located at the outermost sides in the arrangement direction of the plurality of cells 1. The end current collection members 17 are each connected to an electrically conductive portion 19 protruding outward from the cell stack 11. The electrically conductive portion 19 collects electricity generated by power generation in the cells 1 and conducts the electricity to the outside. Note that in FIG. 2A, the end current collection members 17 are not illustrated.

As illustrated in FIG. 2C, in the cell stack device 10, two cell stacks 11A and 11B are connected in series and function as one battery. Therefore, the electrically conductive portion 19 of the cell stack device 10 is divided into a positive electrode terminal 19A, a negative electrode terminal 19B, and a connection terminal 19C.

The positive electrode terminal 19A functions as a positive electrode when the electrical power generated by the cell stack 11 is output to the outside. The positive electrode terminal 19A is electrically connected to the end current collection member 17 on a positive electrode side in the cell stack 11A. The negative electrode terminal 19B functions as a negative electrode when the electrical power generated by the cell stack 11 is output to the outside. The negative electrode terminal 19B is electrically connected to the end current collection member 17 on a negative electrode side in the cell stack 11B.

The connection terminal 19C electrically connects the end current collection member 17 on the negative electrode side in the cell stack 11A and the end current collection member 17 on the positive electrode side in the cell stack 11B.

### Details of Fuel Electrode Layer

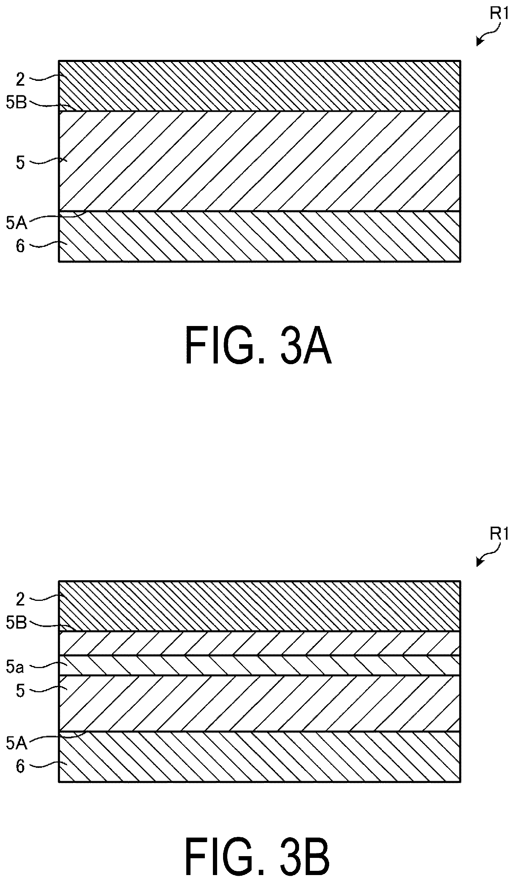

The fuel electrode layer 5 serving as a first electrode according to the first embodiment will be described in detail with reference to FIG. 3A. FIG. 3A is an enlarged cross-sectional view of a region R1 indicated in FIG. 1A.

As illustrated in FIG. 3A, the fuel electrode layer 5 includes a first surface 5A and a second surface 5B. The first surface 5A is located so as to contact the solid electrolyte layer 6. The second surface 5B is located on a side opposite to the first surface 5A. The second surface 5B is located so as to contact the support substrate 2. The thickness of the fuel electrode layer 5 may be, for example, 40 µm or less, or 30 µm or less.

The fuel electrode layer 5 contains a rare earth element. For example, the fuel electrode layer 5 may include CeO₂ in which Y, La, Pr, Nd, Sm, Eu, Gd, Dy, Ho, Er, Yb, or the like is contained as a solid solution. The fuel electrode layer 5 may include, for example, a perovskite-type compound such as BaMO₃ or SrMO₃ (where M is Zr and/or Ce) in which a rare earth element such as Sc, Y, La, Nd, Sm, Gd, Dy, or Yb is contained as a solid solution.

For example, the fuel electrode layer 5 may include a zirconia-based compound or a perovskite-type compound. The fuel electrode layer 5 may include, for example, stabilized zirconia containing Yb. The fuel electrode layer 5 may include, for example, a perovskite-type compound such as BaZrO₃ or SrZrO₃, in which a rare earth element such as Sc, Y, La, Nd, Sm, Gd, Dy, or Yb is contained as a solid solution.

The content proportion of the rare earth element in the fuel electrode layer 5 is higher at the side of the second surface 5B than at the side of the first surface 5A. The fuel electrode layer 5 contains, for example, from 5 atom% to 60 atom% of a rare earth element. For example, the fuel electrode layer 5 contains from 5 atom% to 30 atom% of a rare earth element at the side of the first surface 5A. For example, the fuel electrode layer 5 contains from 10 atom% to 60 atom% of a rare earth element at the side of the second surface 5B. Note that, here, the content proportion (atom%) of the rare earth element in the fuel electrode layer 5 is defined as a proportion in which the total amount of the elements constituting the oxide having ion conductivity (including a rare earth element contained as a solid solution, but excluding oxygen) is the denominator and the amount of the rare earth element is the numerator. Hereinafter, an oxide having ion conductivity is simply referred to as an ion-conductive oxide. Note that, when a plurality of rare earth elements are contained as a solid solution in the oxide having ion conductivity, a sum of the content proportion s of the plurality of rare earth elements may be calculated and compared.

As described above, when the content proportion of the rare earth element is higher on the side of the second surface 5B of the fuel electrode layer 5 than on the side of the first surface 5A, the power generation capability of the cell 1 can be enhanced. For example, on the side of the second surface 5B away from the solid electrolyte layer 6, the content proportion of the rare earth element is relatively high, and thus, the discharge of H₂O generated in the fuel electrode layer 5 during power generation is promoted. On the other hand, the content proportion of the rare earth element is relatively low on the side of the first surface 5A close to the solid electrolyte layer 6, and thus, the reaction in the fuel electrode layer 5 during power generation is promoted. Therefore, according to the cell 1 according to the present embodiment, the power generation capability can be improved.

When the content proportion of the rare earth element is different between the side of the second surface 5B and the side of the first surface 5A of the fuel electrode layer 5, the power generation capability of the cell 1 can be improved. The reason therefor is considered to be that the amount of oxygen vacancies included in the ion-conductive oxide in which the rare earth element is contained as a solid solution changes depending on the amount of the rare earth element contained as a solid solution. At the side of the first surface 5A, the content proportion of the rare earth element, that is, the amount of the rare earth element contained as a solid solution in the ion-conductive oxide is relatively small, and the amount of oxygen vacancies contained in the ion-conductive oxide is relatively small. Therefore, the ion-conductive oxide on the side of the first surface 5A has relatively high ion conductivity, and the supply amount of the oxide ions increases in the vicinity of the solid electrolyte layer 6. As a result, the oxidation reaction of hydrogen is promoted and a large amount of H₂O is produced. On the other hand, at the side of the second surface 5B, the content proportion of the rare earth element, that is, the amount of the rare earth element contained as a solid solution in the ion-conductive oxide is relatively large, and the amount of oxygen vacancies contained in the ion-conductive oxide is relatively large. Therefore, H₂O generated in the fuel electrode layer 5 is attracted to the oxygen vacancies on the side of the second surface 5B and easily moves. As a result, H₂O is easily discharged to the outside of the fuel electrode layer 5, and a failure in which a void inside the fuel electrode layer 5 is blocked by H₂O is less likely to occur. As described above, the oxidation reaction of hydrogen and the discharge of the generated H₂O are both promoted, and thus, the power generation capability of the cell 1 improves. In particular, during power generation in which the utilization rate of fuel gas is relatively high, the influence on the improvement of the power generation capability of the cell 1 is significant.

The content proportion of the rare earth element in the fuel electrode layer 5 can be confirmed by elemental analysis using EPMA, for example. Specifically, for example, a cross section of the element portion 3 in a layering direction is mirror-polished, and one or more rare earth elements are semi-quantitatively analyzed in each of a predetermined surface area of the fuel electrode layer 5 including the first surface 5A and a predetermined surface area of the fuel electrode layer 5 including the second surface 5B. At each of the side of the first surface 5A and the side of the second surface 5B, the content proportion of the rare earth element per unit area is calculated and converted into units of atom%, so that the magnitudes thereof can be compared. At this time, for example, a region from the first surface 5A to 20% or less of the average thickness of the fuel electrode layer 5 may be defined as the side of the first surface 5A, and a region from the second surface 5B to 20% or less of the average thickness of the fuel electrode layer 5 may be defined as the side of the second surface 5B, and the content proportions of the rare earth element in the regions may be compared. The content proportion of the rare earth element may be measured in a plurality of randomly selected cross sections of the fuel electrode layer 5, and the average values thereof may be compared.

In the fuel electrode layer 5, the content proportion of the rare earth element may gradually increase from the first surface 5A toward the second surface 5B. This further improves the power generation capability of the cell 1.

The fuel electrode layer 5 may contain a plurality of types of rare earth elements. The fuel electrode layer 5 may contain a first rare earth element and a second rare earth element. The first rare earth element may be Yb, for example. The second rare earth element may be Y, for example.

The fuel electrode layer 5 may contain a first material having ion conductivity and in which a rare earth element is contained as a solid solution. A first material in which the first rare earth element is contained as a solid solution has higher ion conductivity than a first material in which the second rare earth element is contained as a solid solution. When the fuel electrode layer 5 contains the first materials having different ion conductivity, the ion conductivity in the fuel electrode layer 5 is expected to improve.

When the fuel electrode layer 5 contains the first rare earth element and the second rare earth element described above, the content proportion of the first rare earth element in the fuel electrode layer 5 may be higher on the side of the first surface 5B than on the side of the second surface 5A. This improves the power generation capability of the cell 1.

When the fuel electrode layer 5 contains the first rare earth element and the second rare earth element described above, the content proportion of the first rare earth element may be higher than that of the second rare earth element in the solid electrolyte layer 6 and the first surface 5A of the fuel electrode layer 5. This improves the power generation capability of the cell 1.

FIG. 3B is an enlarged cross-sectional view illustrating another example of the electrochemical cell according to the first embodiment. As illustrated in FIG. 3B, the fuel electrode layer 5 may include a part 5a located between the first surface 5A and the second surface 5B. In the part 5a, the content proportion of the first rare earth element may be higher than in the first surface 5A. Thus, the oxidation reaction of hydrogen can be further promoted in the electrochemically active reaction field in the fuel electrode layer 5.

Note that, in FIG. 3B, the part 5a is located in a portion closer to the second surface 5B than to the first surface 5A of the fuel electrode layer 5. However, the part 5a may be located in a portion closer to the first surface 5A than to the second surface 5B, or may be located in an intermediate portion between the first surface 5A and the second surface 5B. There may be a portion where the part 5a is not located between the first surface 5A and the second surface 5B.

The support substrate 2 is located on the second surface 5B. The support substrate 2 may be a ceramic support body supporting the fuel electrode layer 5. The support substrate 2 may contain a first material in which an oxide of a rare earth element contained in the fuel electrode layer 5 or a rare earth element contained in the solid electrolyte layer 6 is contained as a solid solution. Thus, diffusion of elements between the fuel electrode layer 5 and the support substrate 2 is reduced, and a decrease in the electrical conductivity of the fuel electrode layer 5 and a decrease in the oxidation reaction of hydrogen can be suppressed.

The support substrate 2 may contain an oxide of a second rare earth element. Thus, the particle growth of the rare earth oxide is suppressed, and the strength of the support substrate can be improved.

### Module

A module according to the present embodiment using the above-described electrochemical cell device will be described with reference to FIG 4. FIG. 4 is an exterior perspective view illustrating a module according to the first embodiment. FIG. 4 illustrates a state in which a front surface and a rear surface, which constitute a part of a storage container 101, are removed, and the cell stack device 10 of a fuel cell stored inside the storage container 101 is taken out rearward.

As illustrated in FIG. 4, a module 100 includes the storage container 101, and the cell stack device 10 housed in the storage container 101. The reformer 102 is arranged above the cell stack device 10.

The reformer 102 generates a fuel gas by reforming a raw fuel such as natural gas or kerosene and supplies the fuel gas to the cell 1. The raw fuel is supplied to the reformer 102 through a raw fuel supply pipe 103. Note that the reformer 102 may include a vaporizing unit 102a that vaporizes water, and a reforming unit 102b. The reforming unit 102b includes a reforming catalyst (not illustrated) to reform the raw fuel and obtain a fuel gas. The reformer 102 can perform steam reforming, which is a highly efficient reformation reaction.

The fuel gas generated by the reformer 102 is supplied to the gas-flow passages 2a of the cell 1 (see FIG. 1A) via the gas circulation pipe 20, the gas tank 16, and the support member 14.

In the module 100 having the configuration mentioned above, the temperature in the module 100 during normal power generation is from about 500°C to 1000°C due to combustion of gas and power generation by the cell 1.

The above-described module 100 is configured such that the cell stack device 10 having improved power generation capability is housed therein as described above, and thus, the module 100 having improved power generation capability can be realized.

### Module Housing Device

FIG. 5 is an exploded perspective view illustrating an example of a module housing device according to the first embodiment. A module housing device 110 according to the present embodiment includes an external case 111, the module 100 illustrated in FIG. 4, and an auxiliary device (not illustrated). The auxiliary device operates the module 100. The module 100 and the auxiliary device are housed in the external case 111. Note that a part of the configuration is omitted in FIG. 5.

The external case 111 of the module housing device 110 illustrated in FIG. 5 includes a support 112 and an external plate 113. A dividing plate 114 vertically partitions the interior of the external case 111. The space above the dividing plate 114 in the external case 111 is a module housing chamber 115 housing the module 100. The space below the dividing plate 114 in the external case 111 is an auxiliary device housing chamber 116 housing the auxiliary device that operates the module 100. Note that, in FIG. 5, the auxiliary device housed in the auxiliary device housing chamber 116 is not illustrated.

The dividing plate 114 includes an air circulation hole 117 for causing air in the auxiliary device housing chamber 116 to flow toward the module housing chamber 115. The external plate 113 constituting the module housing chamber 115 includes an exhaust hole 118 for discharging air from inside the module housing chamber 115.

As described above, in such a module housing device 110, the module housing chamber 115 includes the module 100 having improved power generation capability, and thus, the module housing device 110 having improved power generation capability can be realized.

Note that, in the above-described embodiment, a case is described in which a support substrate having a hollow flat plate shape is used. However, the embodiment can also be applied to a cell stack device using a cylindrical support substrate.

### Second Embodiment

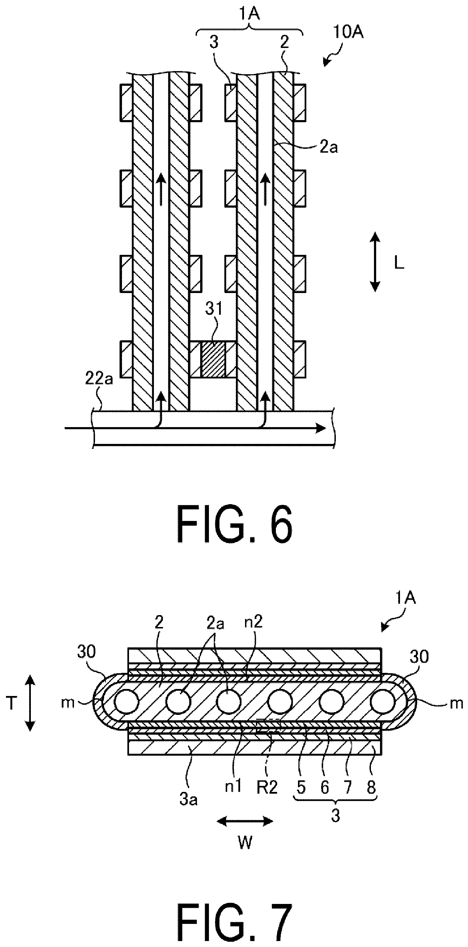

An electrochemical cell and an electrochemical cell device according to a second embodiment will be described with reference to FIGs. 6 to 8.

The above-described embodiment describes a so-called "vertically striped" electrochemical cell device, in which only one element portion including the fuel electrode layer, the solid electrolyte layer, and the air electrode layer is provided on the surface of the support substrate. However, the present embodiment can be applied to a horizontally striped electrochemical cell device having an array of so-called "horizontally striped" electrochemical cells, in which a plurality of element portions are provided at mutually separated locations on the surface of the support substrate and adjacent element portions are electrically connected to each other.

FIG. 6 is a cross-sectional view illustrating an electrochemical cell device according to the second embodiment. FIG. 7 is a horizontal cross-sectional view illustrating an example of an electrochemical cell according to the second embodiment.

As illustrated in FIG. 6, a cell stack device 10A according to the second embodiment includes a plurality of cells 1A extending in the length direction L from a pipe 22a that distributes a fuel gas. Each of the cells 1A includes a plurality of the element portions 3 on the support substrate 2. The gas-flow passage 2a, through which a fuel gas from the pipe 22a flows, is provided inside the support substrate 2.

The cells 1A are electrically connected to each other via a connecting member 31. The connecting member 31 is located between the element portions 3 each included in a corresponding one of the cells 1A and connects adjacent ones of the cells 1A to each other. Specifically, the connecting member 31 connects the air electrode layer 8 of one of the adjacent ones of the cells 1A, and the interconnector 4 electrically bonded to the fuel electrode layer 5 of the other one of the cells 1A.

As illustrated in FIG. 7, each of the cells 1A includes the support substrate 2, a pair of the element portions 3, and a sealing portion 30. The support substrate 2 has a pillar shape having the first surface n1 and the second surface n2 which are a pair of flat surfaces facing each other, and the pair of circular arc-shaped side surfaces m connecting the first surface n1 and the second surface n2.

The pair of element portions 3 is located on the first surface n1 and the second surface n2 of the support substrate 2 so as to face each other. The sealing portion 30 is located so as to cover the side surfaces m of the support substrate 2.

The cell 1A has a shape that is symmetric with respect to a plane that passes through a center in the thickness direction T and is parallel to the first surface n1 and the second surface n2 of the support substrate 2. The element portion 3 includes the fuel electrode layer 5, the solid electrolyte layer 6, the intermediate layer 7, and the air electrode layer 8.

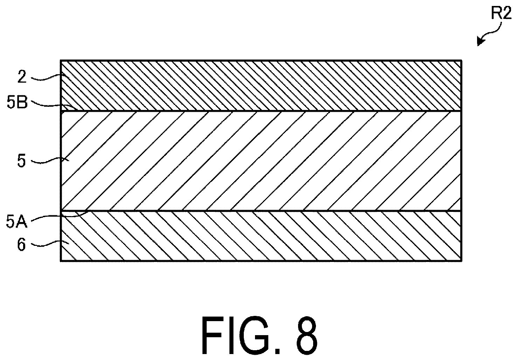

FIG. 8 is an enlarged cross-sectional view of a region R2 indicated in FIG. 7. As illustrated in FIG. 8, the fuel electrode layer 5 includes the first surface 5A and the second surface 5B. The first surface 5A is located so as to contact the solid electrolyte layer 6. The second surface 5B is located on a side opposite to the first surface 5A. The second surface 5B is located so as to contact the support substrate 2.

The solid electrolyte layer 6 includes a first material having ion conductivity and in which a rare earth element is contained as a solid solution. The fuel electrode layer 5 contains a rare earth element. The content proportion of the rare earth element in the fuel electrode layer 5 is higher at the side of the second surface 5B than at the side of the first surface 5A. This can enhance the power generation capability of the cell 1A. For example, on the side of the second surface 5B away from the solid electrolyte layer 6, the content proportion of the rare earth element is relatively high, and thus, the discharge of H₂O generated in the fuel electrode layer 5 during power generation is promoted. On the other hand, the content proportion of the rare earth element is relatively low on the side of the first surface 5A close to the solid electrolyte layer 6, and thus, the reaction in the fuel electrode layer 5 during power generation is promoted. Thus, according to the cell 1A according to the present embodiment, the power generation capability can be improved.

### Third Embodiment

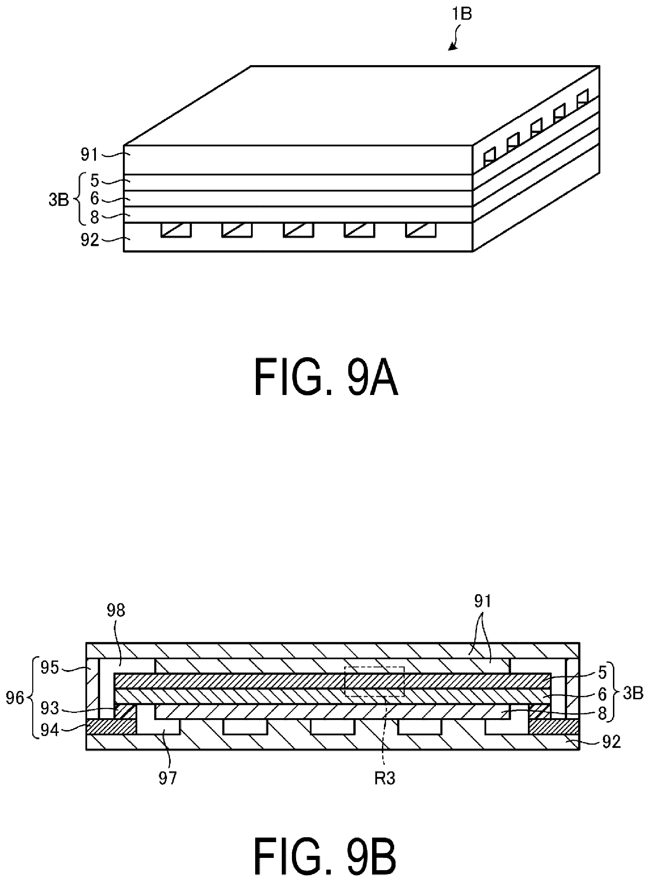

FIG. 9A is a perspective view illustrating an example of an electrochemical cell according to a third embodiment. FIG. 9B is a partial cross-sectional view of the electrochemical cell illustrated in FIG. 9A.

As illustrated in FIG. 9A, a cell 1B includes an element portion 3B, in which the fuel electrode layer 5, the solid electrolyte layer 6, and the air electrode layer 8 are layered. The element portion 3B is a part in which the solid electrolyte layer 6 is sandwiched between the fuel electrode layer 5 and the air electrode layer 8. The element portion 3B may include an intermediate layer located between the solid electrolyte layer 6 and the air electrode layer 8. In an electrochemical cell device in which a plurality of flat plate-shaped cells are layered, for example, a plurality of the cells 1B are electrically connected by electrically conductive members 91 and 92, which are metal layers adjacent to each other. The electrically conductive members 91 and 92 electrically connect adjacent ones of the cells 1B to each other, and each include a gas-flow passage for supplying gas to the fuel electrode layer 5 or the air electrode layer 8.

As illustrated in FIG. 9B, a sealing material is provided that hermetically seals a channel 98 of a fuel gas and a channel 97 of an oxygen-containing gas of the flat plate-shaped cell stack. The sealing material is a fixing member 96 of the cell, and includes a bonding material 93 and support members 94 and 95 serving as a frame. The bonding material 93 may be a glass or may be a metal material such as silver solder.

The support member 94 may be a so-called separator that separates the channel 98 of the fuel gas and the channel 97 of the oxygen-containing gas. The material of the support members 94 and 95 may be, for example, an electrically conductive metal, or may be a ceramic having insulation properties. One or both of the support members 94 and 95 may be made of an insulating material. When the support member 94 is made of metal, the support member 94 may be formed integrally with the electrically conductive member 92. When the support member 95 is made of metal, the support member 95 may be formed integrally with the electrically conductive member 91.

One among the bonding material 93 and the support members 94 and 95 has insulation properties and electrically insulates from each other the two electrically conductive members 91 and 92 sandwiching the flat plate-shaped cell.

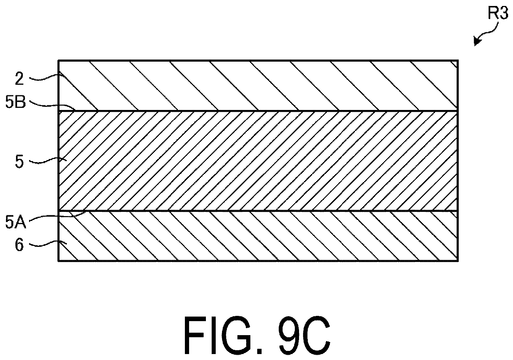

FIG. 9C is an enlarged cross-sectional view of a region R3 illustrated in FIG. 9B. As illustrated in FIG. 9C, the fuel electrode layer 5 includes the first surface 5A and the second surface 5B. The first surface 5A is located so as to contact the solid electrolyte layer 6. The second surface 5B is located on a side opposite to the first surface 5A. The second surface 5B is located so as to contact the electrically conductive member 91.

The solid electrolyte layer 6 includes a first material having ion conductivity and in which a rare earth element is contained as a solid solution. The fuel electrode layer 5 contains a rare earth element. The content proportion of the rare earth element in the fuel electrode layer 5 is higher at the side of the second surface 5B than at the side of the first surface 5A. This can enhance the power generation capability of the cell 1B. For example, on the side of the second surface 5B away from the solid electrolyte layer 6, the content proportion of the rare earth element is relatively high, and thus, the discharge of H₂O generated in the fuel electrode layer 5 during power generation is promoted. On the other hand, the content proportion of the rare earth element is relatively low on the side of the first surface 5A close to the solid electrolyte layer 6, and thus, the reaction in the fuel electrode layer 5 during power generation is promoted. Thus, according to the cell 1B according to the present embodiment, the power generation capability can be improved.

### Fourth Embodiment

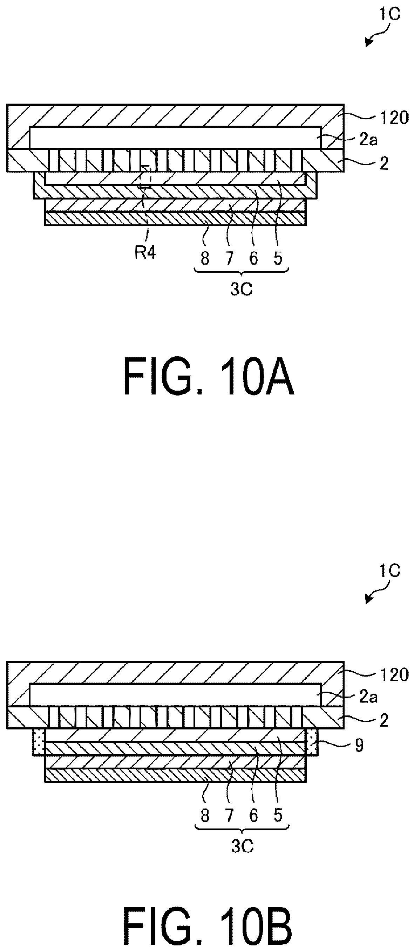

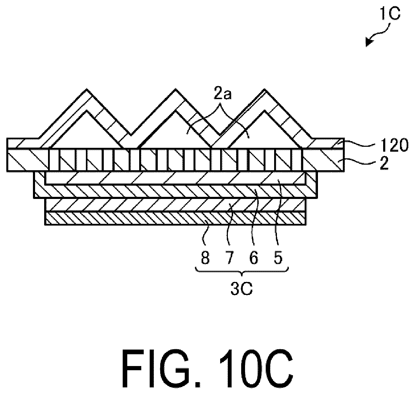

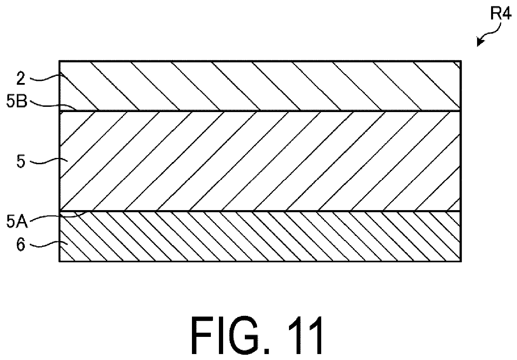

FIG. 10A is a horizontal cross-sectional view illustrating an example of an electrochemical cell according to a fourth embodiment. FIGs. 10B and 10C are horizontal cross-sectional views illustrating other examples of the electrochemical cell according to the fourth embodiment. FIG. 11 is an enlarged view of a region R4 indicated in FIG. 10A. Note that FIG. 11 can also be applied to the examples of FIGs. 10B and 10C.

As illustrated in FIGs. 10A to 10C, a cell 1C includes an element portion 3C and the support substrate 2. In the element portion 3C, the fuel electrode layer 5, the solid electrolyte layer 6, the intermediate layer 7, and the air electrode layer 8 are layered. The support substrate 2 includes a through hole or a fine hole at a part contacting the element portion 3C, and includes a member 120 located outside the gas-flow passage 2a. The support substrate 2 can cause gas to flow between the gas-flow passage 2a and the element portion 3C. The support substrate 2 may be constituted by one or more metal plates, for example. A material of the metal plate may contain chromium. The metal plate may include an electrically conductive coating layer. The support substrate 2 electrically connects adjacent ones of the cells 1C to each other. The element portion 3C may be directly formed on the support substrate 2 or may be bonded to the support substrate 2 with a bonding material.

In the example illustrated in FIG. 10A, a side surface of the fuel electrode layer 5 is coated with the solid electrolyte layer 6 to hermetically seal the gas-flow passage 2a through which the fuel gas flows. As illustrated in FIG. 10B, the side surface of the fuel electrode layer 5 may be covered and sealed with a dense sealing material 9 containing glass or ceramic. The sealing material 9 covering the side surface of the fuel electrode layer 5 may have electrical insulation properties.

The gas-flow passage 2a of the support substrate 2 may be made of the member 120 having unevenness, as illustrated in FIG. 10C.

FIG. 11 is an enlarged cross-sectional view of the region R4 indicated in FIG. 10A. As illustrated in FIG. 11, the fuel electrode layer 5 includes the first surface 5A and the second surface 5B. The first surface 5A is located so as to contact the solid electrolyte layer 6. The second surface 5B is located on a side opposite to the first surface 5A. The second surface 5B is located so as to contact the support substrate 2.

The solid electrolyte layer 6 includes a first material having ion conductivity and in which a rare earth element is contained as a solid solution. The fuel electrode layer 5 contains a rare earth element. The content proportion of the rare earth element in the fuel electrode layer 5 is higher at the side of the second surface 5B than at the side of the first surface 5A. This can enhance the power generation capability of the cell 1C. For example, on the side of the second surface 5B away from the solid electrolyte layer 6, the content proportion of the rare earth element is relatively high, and thus, the discharge of H₂O generated in the fuel electrode layer 5 during power generation is promoted. On the other hand, the content proportion of the rare earth element is relatively low on the side of the first surface 5A close to the solid electrolyte layer 6, and thus, the reaction in the fuel electrode layer 5 during power generation is promoted. Therefore, according to the cell 1C according to the present embodiment, the power generation capability can be improved.

### Other Embodiments

An electrochemical cell device according to another embodiment will be described.

In the above-described embodiments, a fuel cell, a fuel cell stack device, a fuel cell module, and a fuel cell device are described as examples of the "electrochemical cell", the "electrochemical cell device", the "module", and the "module housing device". However, other examples include an electrolytic cell, an electrolytic cell stack device, an electrolytic module, and an electrolytic device. The electrolytic cell includes a first electrode and a second electrode and, when being supplied with electrical power, decomposes water vapor into hydrogen and oxygen or decomposes carbon dioxide into carbon monoxide and oxygen.

According to the electrolytic cell, the electrolytic cell stack device, the electrolytic module, and the electrolytic device described above, a content proportion of a rare earth element in the first electrode is higher on the side of the second surface than on the side of the first surface, and thus, the electrolysis performance of the electrochemical cell can be improved. For example, on the side of the second surface away from the solid electrolyte layer, the content proportion of the rare earth element is relatively high, and thus, the supply of H₂O into the first electrode is promoted. On the other hand, the content proportion of the rare earth element is relatively low on the side of the first surface close to the solid electrolyte layer, and thus, the reaction at the first electrode during electrolysis is promoted. Therefore, according to the electrochemical cell according to the present embodiment, the electrolysis performance improves. In particular, during electrolysis in which the supply amount of H₂O is relatively high, the influence on the improvement of the electrolysis performance of the electrochemical cell is significant.

While the present disclosure has been described in detail, the present disclosure is not limited to the aforementioned embodiments, and various changes, improvements, and the like can be made without departing from the gist of the present disclosure.

In one embodiment, (1) an electrochemical cell includes:
a solid electrolyte layer including a first material having ion conductivity and in which a rare earth element is contained as a solid solution, and
a first electrode including a rare earth element and having a first surface contacting the solid electrolyte layer and a second surface on a side opposite to the first surface, in which a content proportion of the rare earth element in the first electrode is higher on a side of the second surface than on a side of the first surface.

(2) In the electrochemical cell according to the above-described (1),
the content proportion of the rare earth element in the first electrode may gradually increase from the first surface toward the second surface.

(3) In the electrochemical cell according to the above-described (1) or (2),
the first electrode includes a first rare earth element and a second rare earth element, and a content proportion of the first rare earth element may be higher on a side of the first surface than on a side of the second surface.

(4) The electrochemical cell according to the above-described (3) may further include a part located between the first surface and the second surface and the content proportion of the first rare earth element in the part is higher than in the first surface.

(5) In the electrochemical cell according to any one of the above-described (1) to (4), the rare earth element included in the first electrode includes a first rare earth element and a second rare earth element, and
a content proportion of the first rare earth element may be higher than a content proportion of the second rare earth element in the solid electrolyte layer and the first surface.

(6) The electrochemical cell according to any one of the above-described (1) to (5) may further include
a ceramic support body located on the second surface and including an oxide of the rare earth element included in the first electrode, or the first material in which the rare earth element included in the solid electrolyte layer is contained as a solid solution.

(7) The electrochemical cell according to any one of the above-described (3) to (5) may further include
a ceramic support body located on the second surface and containing an oxide of the second rare earth element.

In one embodiment, (8) an electrochemical cell device includes a cell stack including the electrochemical cell according to any one of the above-described (1) to (7).

In one embodiment, (9) a module includes:
the electrochemical cell device according to the above-described (8), and
a storage container housing the electrochemical cell device.

In one embodiment, (10) a module housing device includes:
the module according to the above-described (9),
an auxiliary device configured to operate the module, and
an external case housing the module and the auxiliary device.

Note that the embodiments disclosed herein are exemplary in all respects and not restrictive. The aforementioned embodiments can be embodied in a variety of forms. Various omissions, replacements, and changes may be added to the aforementioned embodiments without departing from the scope of the appended claims and the purpose thereof.

### REFERENCE SIGNS

1, 1A, 1B, 1C Cell
2 Support substrate
3, 3B, 3C Element portion
4 Interconnector
5 Fuel electrode layer
6 Solid electrolyte layer
7 Intermediate layer
8 Air electrode layer
10, 10A Cell stack device
11 Cell stack
12 Fixing member
13 Fixing material
14 Support member
15 Support body
16 Gas tank
17 End current collection member
18 Electrically conductive member
100 Module
110 Module housing device

## Claims

1. An electrochemical cell comprising:
a solid electrolyte layer containing a first material having ion conductivity and in which a rare earth element is contained as a solid solution; and
a first electrode containing a rare earth element and having a first surface contacting the solid electrolyte layer and a second surface on a side opposite to the first surface, wherein
a content proportion of the rare earth element in the first electrode is higher on a side of the second surface than on a side of the first surface.

2. The electrochemical cell according to claim 1, wherein
the content proportion of the rare earth element in the first electrode gradually increases from the first surface toward the second surface.

3. The electrochemical cell according to claim 1 or 2, wherein
the first electrode contains a first rare earth element and a second rare earth element; and
a content proportion of the first rare earth element is higher on a side of the first surface than on a side of the second surface.

4. The electrochemical cell according to claim 3, further comprising:
a part located between the first surface and the second surface, wherein
the content proportion of the first rare earth element in the part is higher than in the first surface.

5. The electrochemical cell according to any one of claims 1 to 4, wherein
the rare earth element contained in the first electrode comprises a first rare earth element and a second rare earth element; and
a content proportion of the first rare earth element is higher than a content proportion of the second rare earth element in the solid electrolyte layer and the first surface.

6. The electrochemical cell according to any one of claims 1 to 5, further comprising:
a ceramic support body located on the second surface and comprising an oxide of the rare earth element contained in the first electrode, or the first material in which the rare earth element contained in the solid electrolyte layer is contained as a solid solution.

7. The electrochemical cell according to any one of claims 3 to 5, further comprising:
a ceramic support body located on the second surface and comprising an oxide of the second rare earth element.

8. An electrochemical cell device comprising:
a cell stack comprising the electrochemical cell according to any one of claims 1 to 7.

9. A module comprising:
the electrochemical cell device according to claim 8; and
a storage container housing the electrochemical cell device.

10. A module housing device comprising:
the module according to claim 9;
an auxiliary device configured to operate the module; and
an external case housing the module and the auxiliary device.
